# EUROPEAN PATENT SPECIFICATION

(11) **EP 1 569 520 B1**
(45) Date of publication and mention of the grant of the patent: **21.03.2012**
(21) Application number: 03777037.7
(22) Date of filing: 03.12.2003
(51) Int. Cl.: A23C 9/123, A23C 19/05, A23C 19/032

(54) **PROCESS TO IMPROVE MILK COAGULATION BY MEANS OF STRAINS OF LACTIC BACTERIA, NEW STRAINS AND THEIR USE IN SAID PROCESS**
VERFAHREN ZUR VERBESSERUNG DER MILCH KOAGULATION MIT HILFE VON MILCHSÄUREBAKTERIEN, NEUE STÄMME UND IHRE VERWENDUNG IM GENANNTEN VERFAHREN
PROCEDE D'AMELIORATION DE LA COAGULATION DU LAIT A L'AIDE DE SOUCHES DE BACTERIES LACTIQUES, NOUVELLES SOUCHES ET LEUR UTILISATION DANS CE PROCEDE

(30) Priority: 09.12.2002 IT MI20022604
(43) Date of publication of application: 07.09.2005
(73) Proprietor: Mofin S.R.L., 28100 Novara (IT)
(72) Inventor: MOGNA, Giovanni, I-28100 Novara (IT)
(74) Representative: HOFFMANN EITLE
(86) International application number: PCT/IB2003/005631
(87) International publication number: WO 2004/052112

(56) References cited:
- EP-A- 0 312 359
- EP-A- 0 505 164
- EP-A- 1 195 095
- WO-A-99/33351
- CH-A- 635 985
- US-A- 5 942 263
- US-A1- 2001 046 532
- DATABASE WPI Section Ch, Week 197546 Derwent Publications Ltd., London, GB; Class D13, AN 1975-76831W XP002276630 & SU 425 612 A (CHERNOV L M) 10 March 1975 (1975-03-10)

## Description

### FIELD OF THE INVENTION

The present invention relates to a process to improve milk coagulation comprising pre-treatment of the milk with appropriate strains of lactic bacteria, new strains of lactic bacteria and their use in the process.

In particular, the invention relates to a process for pre-ripening milk through the use of lactic bacteria that provides the milk treated in this way with an increased aptitude to coagulation in view of its use in transformation into dairy products.

### TECHNICAL BACKGROUND

Milk coagulation forms the basis of the cheese-making process that leads to the making of cheese, yoghurt and other dairy products.

The phenomenon of coagulation consists in a structural modification of the casein micelles that combine to form aggregates through the effect of the action of heat, of acidification and as a consequence of an enzymatic action.

Milk coagulation through the effect of thermal heating is caused mainly by denaturation of the whey proteins that aggregate and subsequently are complexed with the casein to form coprecipitates at temperatures above 70°C.

Acid coagulation is instead caused by aggregation of the casein micelles through the effect of the loss of calcium phosphate by these micelles; decrease in the pH caused by the increase in the concentration of acids in the milk has the effect of ionizing the acid functions of the casein, causing a decrease in potential that in turn increases the dissolution of calcium salts. This phenomenon induces a progressive passage of the calcium from the calcium phospho-caseinate of the casein micelle to the aqueous matrix of the milk; at pH values of 5.7 - 5.8, 50% of the colloidal calcium has passed into the solution, while at a pH of 4.6 (isoelectric point of the casein) there is total demineralization of the casein and therefore maximum destabilization of the casein micelles that aggregate to form the coagulum.

Cheeses representative of the "lactic" category are for example "caprino" cheese, or even yoghurt and more generally those cheeses with a paste that is soft, loosely bound and white.

EP0312359 discloses a method of making cheese that includes heat treating a raw milk and post-acidifying the cooled milk prior to inoculating with a starter culture. Enzymatic coagulation of the milk takes place by adding substances, generally defined *"milk coagulants ",* capable of determining, by means of hydrolytic action on the k casein, destabilization of the casein micelles that promotes their aggregation to form a gel defined as *"curd ".*

Ripening of the curd by these coagulating enzymes and by those produced by the lactic bacteria used in processing determines the structural and organoleptic properties of the various cheeses ready for consumption.

Enzymatic coagulation can also be defined as "rennet" coagulation, as since time immemorial "rennet" has been used in the cheese-making process; this is an enzymatic preparation of animal origin constituted by the natural extract from the abomasums of calves, sheep and goats, prepared according to a traditional method. The main coagulating enzymes found in rennet are rennin and pepsin.

Rennet coagulation undoubtedly forms the type used most widely in cheese-making throughout the world, especially for those of top quality such as those classed as "Designation of Origin" and typical. According to the type of coagulation used, the cheese-making technique essentially provides two categories of cheeses: cheeses made primarily with rennet coagulation and cheeses made primarily with lactic coagulation.

An example of some cheeses representing the "rennet" category are Italico, Emmenthal, and in general those cheeses with a hard, rubbery, yellow paste.

The coagulating effect of the enzymes may be schematically divided into three successive phases: the first phase consists in the enzyme attaching to the micellar casein with hydrolysis of the phenylalanine-methionine bond (position 105-106 in the k casein chain) leading to the release of a highly hydrophilic glycopeptide-casein; the second phase consists in hydrophobic bonds and calcium-phosphate saline bridges being formed between the casein micelles destabilized due to the modifications induced on the k casein, which until that moment acted as protective colloid; no longer protected by the glycopeptide, the casein molecules knock against one another and, thanks to the calcium found in ionic form in the milk, start to bond to one another to determine the phenomenon of flocculation; the third phase follows flocculation and consists in strengthening of the casein network through the formation of an increasing number of bonds of different chemical nature.

The whey part remains trapped inside the casein matrix that forms the supporting structure of the casein gel.

During the third phase the consistency of the gel increases following an increase in the intermicellar bonds: the micelles move towards one another and the coagulum contracts to expel the whey. This phenomenon, also known as exudation or syneresis, is accelerated by cutting the curd, increasing the temperature and increasing the acidity produced by the lactic bacteria which develop to quickly transform lactose into lactic acid.

Only the first two phases described above determine actual coagulation, that is the passage of the casein from the condition of colloidal suspension to the condition of gel, while the third phase essentially consists in gelation of the entire mass of the milk and the start of non specific proteolytic phenomena in other sites of the k casein and on the αs and β caseins.

The speed and pattern of flocculation and of subsequent gelation strongly affect the rheological properties of the curd to a specific extent with reference to elasticity, texture, permeability and contractility of the coagulum and, consequently, the syneresis capacity of the whey.

Numerous factors influence the phases described above, particularly the first two phases.

The duration of the first phase (also called "flocculation time") is influenced by the temperature, which must be similar to the optimal temperature for enzyme activity; the concentration of the enzyme, the total calcium and phosphorous; the free acidity values (pH); the tertiary and quaternary structure of the casein (which may promote or obstruct access of the enzyme to the sites of attachment).

The characteristics of the second phase (gelation) are mainly influenced by the protein concentration, the casein, the concentration of calcium ions and free phosphates; the free acidity (pH) and the temperatures that increases the reaction speed.

Implementation of these two phases may be followed and assessed using a thromboelastogram, with which the flocculation time (or "firming time") corresponding to the first phase and the extent of gelation corresponding to the second phase can be measured.

For these measurements an appropriate instrument called lactodynamograph is normally used, with which it is possible to establish in advance whether the properties of the milk being examined make it suitable for making cheese. Said lactodynamograph thus allows the coagulation time and consistency of the milk coagulum to be established. Greater details on this technique are provided for example in "Trattato di Tecnologia Casearia" by Ottavio Salvadori del Prato, Ed agricole, 1998, pages 203-205.

Therefore, the aptitude of milk to rennet coagulation, that is its reactivity towards rennet, together with its aptitude to fermentation, that is its susceptibility to the growth of lactic bacteria, form a fundamental parameter for correct and optimum transformation into dairy products.

The two parameters "aptitude to rennet coagulation" and "aptitude to fermentation" are therefore technologically determining factors for the quality of the cheese and it is important to stress that milk suitable to be made into cheese must have these properties in a balanced proportion, that is high propensity towards coagulation must correspond to the same high propensity towards fermentation; the worst situation is represented by milk that against a high aptitude to fermentation has poor reactivity to coagulation and vice versa.

In recent years there has been a statistical increase in milk characterized by a reduced aptitude to rennet coagulation in contrast to an apparent increased aptitude to fermentation; this jeopardizes the global cheese-making aptitude which translates into lower transformation yield and/or the production of cheeses of poorer quality.

In actual fact, the increase in the development speed of lactic ferments is a consequence of the first phenomenon, as a less consistent curd, with a softer texture, resulting from anomalous coagulation, cannot exude the whey adequately and therefore, at least initially, contains more lactose than it should, thus promoting the multiplication of lactic ferments that produce excessive lactic acid. Acidification that takes place too fast causes excessive demineralization of the curd, making it crumbly and loose to an extent that it is unable retain an adequate quantity of whey. At this point due to lack of nourishment the bacterial flora stops or reduces its development resulting in a curd with a weak casein network characterized by an excessive loss of whey due to acidification taking place too fast in a premature phase and which cannot ripen correctly during the maturing phase.

Therefore, it is understood that milk coagulation for all transformations into dairy products is typical and specific for each cheese and that both enzymatic action and the effect of acidification contribute towards determining the optimum coagulum. Both these phenomena must succeed each other in the correct times and occur with the typical modality and intensity for the specific processing.

The aptitude to rennet coagulation of the milk is influenced by the casein content and by the micellar structure in its complex, intended as number of micelles, sub-micelles and degree of distribution in amplitude classes.

It is in fact evident that the greater the number of micelles present per unit of volume the smaller the distance between them, promoting aggregation. With regard to the dimensions of the micelles it is known that this depends on the concentration of colloidal phosphate and on the ratios between the various types of casein (αₛ₁, αₛ₂, β, *k*). Milk in which classes with small (micelle sizes between 12 and 68 mn) and medium (micelle sizes between 68 and 162 nm) dimensions are predominant usually coagulate better than those with larger micellar dispersion.

The other factors of milk that have a direct or indirect role in the phenomenon of coagulation are, as already shown, acidity that influences the hydrolysis speed, aggregation of the paracasein micelles and the quantities of calcium and phosphorous. As colloidal phosphate, phosphorous performs a cementing function between the sub-micelles during forming the micelles, while both greatly influence the pattern in the secondary coagulation phase.

The variability of all the parameters mentioned above is linked to factors endogenous and exogenous to dairy cows. The former include genetic factors (race and individual), physiological factors (state of lactation) and pathological factors (health of the animal). Among the latter, zootechnical factors such as feed, environment and milking technique are particularly important.

For correct cheese-making it would therefore be essential to use milk produced by healthy animals, rich in protein and balanced as regards salinity, capable of producing a compact, sufficiently elastic and firm coagulum.

As in recent years preference has been given to selective and zootechnical factors which together have targeted quantity rather than quality, this has caused an increasing statistical incidence of hypoacid milk with a low saline content or with normal acidity but highly unbalanced in the saline concentration, usually with a low calcium and colloidal phosphorous content and an increase in the respective free ions. However, while the calcium ion, at least up to a certain concentration, plays a positive role in contributing towards micelle formation, the phosphoric ion causes an increase in soluble casein to the detriment of colloidal casein.

### SUMMARY OF THE INVENTION

In has now surprisingly been found that it is possible to improve the aptitude to coagulation of milk without modifying the parameters influencing the phases of the flocculation and gelation time discussed above, thus obtaining milk with an improved tendency to coagulate.

In particular, it has been found that by adding certain lactic bacteria to the milk before cheese-making treatments, and before pasteurization, if performed, it is possible to optimize coagulation without however modifying the normal coagulation parameters.

### DETAILED DESCRIPTION OF THE INVENTION

Therefore, according to one of its aspects, the invention relates to a process of treating milk to provide greater aptitude to coagulation of the milk during its transformation into dairy products comprising adding to the milk, before coagulation treatment, at least one strain of lactic bacteria chosen from *L. plantarum* LMG-P-21385 deposited on 31 January 2002, *L. lactis* subsp. *lactis* LMG-P-21387 deposited on 15 March 2002, *L. lactis* subsp. *lactis* LMG-P-21388 deposited on 31 January 2002 and L. plantarum LMG-P-21389 deposited on 15 March 2002, at the BCCM/LMG Bacteria Collection in Gent, Belgium.

The codes correlated to the strains above refer to the access numbers of the relative deposits made in accordance with the Budapest Treaty on international recognition of the deposit of microorganisms of 28 April 1977.

Said strains and their use in the process of the invention are new and form a further object of the invention.

These strains may alternatively be used individually or in combination with one another.

The expression "improve/promote coagulation" is intended, according to the present invention, as inducing in milk a greater aptitude to coagulation, promoting subsequent transformations into dairy products.

The use of the strains of the invention, on their own or in combination with one another to prepare cheeses and/or yoghurt is a further aspect of the invention, just as the cheeses deriving from milk to which said strains have been added.

The strains may be added to the milk in the form of liquid strains, preferably grown in milk, or in anhydrous form, for example lyophilized, if necessary redissolved immediately prior to use.

To obtain the desired result, only a very small quantity of the strain requires to be added to the milk; normally, adequate quantities range from 0.1 to 1% of liquid culture in respect of the milk (volume/volume), preferably from 0.3 to 0.5%.

As is know, from around 10⁸ to around 10⁹ CFU/ml (colony forming units/ml) are present in liquid cultures of lactic bacteria.

In the case in which the use of anhydrous cultures, such as lyophilized cultures, is desired or more convenient, from 10¹¹ to 10¹² CFU/100 litres of milk may be used. According to an advantageous embodiment, the strains are added to the milk during storage, preferably before pasteurization, if performed.

The milk with the strains added, which is then subjected to normal coagulation and cheese-making treatments, has a decidedly improved aptitude to coagulate and therefore allows better yields to be obtained, facilitating the production of dairy products and simultaneously requiring lower quantities of coagulating agents and/or additives that aid coagulation where permitted (for example calcium, powdered milk, etc.).

Therefore, the process and the strains of the invention allow a decided improvement in the results of coagulation of the milk to be obtained in terms of costs and yields, as indicated above, and also provide a milk coagulation procedure that is more precise and standardized, with repeatable and reliable results.

In practice and according to an advantageous embodiment, the strains may be added to the milk delivered to the cheese factory at the time of storage; the stored milk is normally processed during the subsequent 24 hours, for example to be pasteurized. The simple addition of the quantities indicated above (or of larger quantities, if desired) of the strain of the invention provides a milk with an improved aptitude to coagulation.

As already mentioned above, it has been experimentally ascertained that none of the factors that influence the phases of flocculation and gelation time are modified by adding the strains of the invention. This is particularly important to ensure that the qualitative and organoleptic properties of the milk treated according to the process of the invention are in no way modified and that the only appreciable variation to be found after adding the strains is exclusively an increased tendency to coagulation. The milk with the addition, treated according to the process described above and with an improved aptitude to coagulation and the milk with at least one of the strains added form a further object of the present invention.

The experimental part below provides a detailed description of the representative aspects of the invention without limiting it in any way.

### EXPERIMENTAL PART

### EXAMPLE 1

### Evaluation of the aptitude to coagulation of the milk.

To ascertain the aptitude to coagulation of the milk treated with the strains of the invention, tests were performed with a FOSS Italia lactodynamograph at 6, 9 and 12°C, adding variable quantities (from 0.3 to 0.5%) of strains of lactic bacteria and detecting the results by means of a thromboelastogram.

In detail, the procedure below was followed:

To a known volume of milk, heated to a predefined temperature, an efficacious quantity of rennet was added (in addition to the strains to be tested, with the exclusion of the control sample) to induce coagulation. The wells containing the milk were placed on top of a moving base, which performs an extremely slow rotating movement. The blade immersed in the milk does not initially encounter great friction and remains stationary, then as coagulation proceeds, it draws the blade with it. which thus follows the movement of the moving base.

The results were compared with those obtained in the same conditions and at the same temperature with the same milk without the strains added (control).

### Results

The results are shown in the accompanying Figures (I)-(III).

In all the figures the wells represent respectively:
*(1) L. plantarum* LMG-P-21385,
(2) *L. lactis* subsp. *lactis* LMG-P-21388,
(3) *L. lactis* subsp. *lactis* LMG-P-21387,
(4) *L. plantarum* LMG-P-21389,
(5) control (milk without strains added).

Figure (I) shows the thromboelastograms of milk treated with the strains of the invention at the rate of 0.3%, at the temperature of 6°C for 18 hours.
Figure (II) shows the thromboelastograms of milk treated with the strains of the invention at the rate of 0.3%, at a temperature of 9°C for 18 hours.
Figure (III) shows the thromboelastograms of milk treated with the strains of the invention at the rate of 0.3%, at a temperature of 12°C for 18 hours.

As can be clearly seen in the Figures indicated above, the strains added all allow, at the different temperatures, an improvement to be obtained in the aptitude of the milk to coagulate in respect of the control sample, improving all the parameters represented by the thromboelastograms in the Figures, such as initial flocculation time, firming time and amplitude of the coagulum, without modification of the pH.

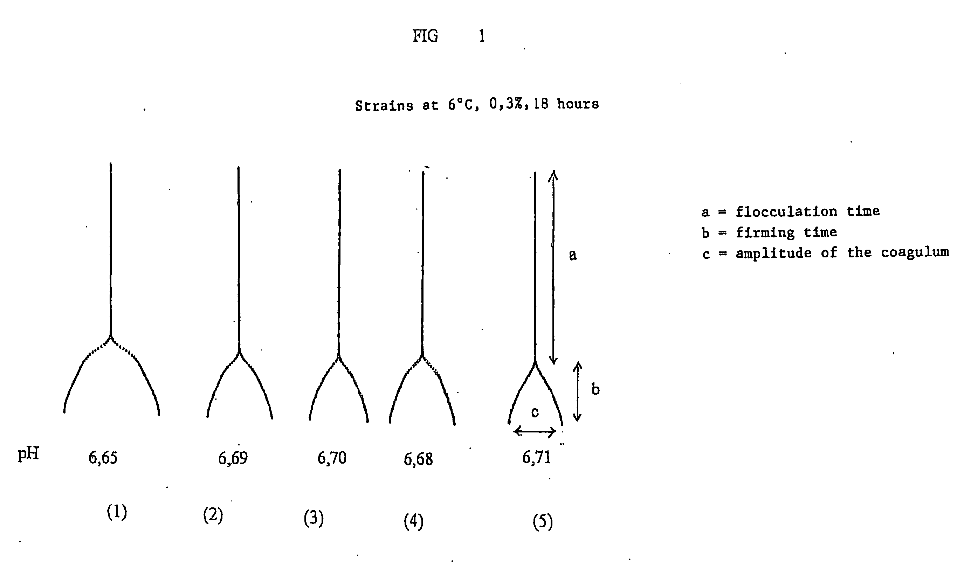

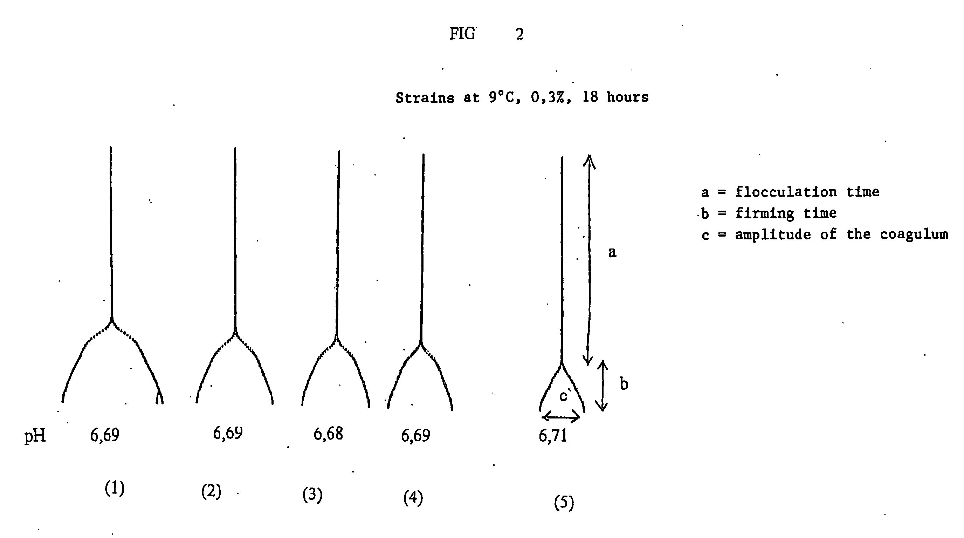

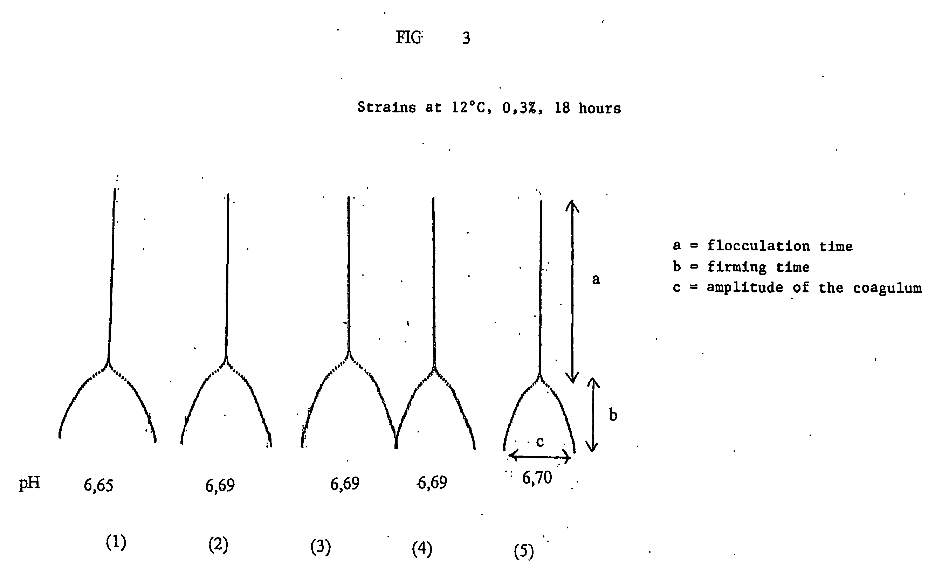

## Claims

1. A process of treating milk to provide greater aptitude to coagulation of the milk during its transformation into dairy products comprising adding to the milk, before coagulation treatment, at least one strain of lactic bacteria chosen from L. plantarum LMG-P-21385, L. lactis subsp. lactis LMG-P-21387, L. lactis subsp. lactis LMG-P-21388 and L. plantarum LMG-P-21389.

2. Process as claimed in claim 1, **characterized in that** said at least one strain is added to the milk in the form of liquid culture.

3. Process as claimed in claim 1, **characterized in that** said at least one strain is added to the milk in anhydrous form.

4. Process as claimed in claim 1, **characterized in that** said at least one strain is added to the milk in quantities ranging from 0.1 to 1% of liquid culture with respect to the milk (volume/volume).

5. Process as claimed in claim 4, **characterized in that** said at least one strain is added to the milk in quantities ranging from 0.3 to 0.5% of liquid culture in respect of the milk (volume/volume).

6. Process as claimed in claim 1, **characterized in that** said at least one strain is added to the milk in quantities ranging from 10¹¹ to 10¹² CFU/100 litres of milk.

7. Process as claimed in any one of the previous claims, **characterized in that** said at least one strain is added to the milk before pasteurization.

8. Strain of lactic bacteria chosen in the group consisting in L. plantarum LMG-P-21385. L. lactis subsp. lactis LMG-P-21387, L. lactis subsp. lactis LMG-P-21388 and L. plantarum LMG-P-21389.

9. Mixture of lactic bacteria suitable to improve/promote milk coagulation comprising two or more strains as claimed in claim 8.

10. Use of at least one strain as claimed in claim 8 to improve/promote milk coagulation.

11. Use of at least one strain as claimed in claim 8 to prepare milk derivatives.

12. Use as claimed in claim 11 wherein said derivatives are cheeses and/or yoghurt.

13. Milk containing at least one strain of claim 8 or a mixture as claimed in claim 9.

14. Milk obtained from the process as claimed in any of the claims from 1 to 7.

15. Dairy product deriving from milk according to claims 13 or 14.

## Patentansprüche

1. Verfahren zur Behandlung von Milch zur Bereitstellung einer größeren Neigung der Milch zur Koagulation während ihrer Transformation in Milchprodukte, umfassend vor der Koagulations-Behandlung die Zugabe mindestens eines Stammes von Milchsäurebakterien zur Milch, die ausgewählt sind aus L. plantarum LMG-P-21385, L. lactis Subsp. lactis LMG-P-21387, L. lactis Subsp. lactis LMG-P-21388 und L. plantarum LMG-P-21389.

2. Verfahren gemäß Anspruch 1, **dadurch gekennzeichnet, dass** der mindestens eine Stamm zur Milch in Form einer Flüssigkultur zugegeben wird.

3. Verfahren gemäß Anspruch 1, **dadurch gekennzeichnet, dass** der mindestens eine Stamm zur Milch in wasserfreier Form zugegeben wird.

4. Verfahren gemäß Anspruch 1, **dadurch gekennzeichnet, dass** der mindestens eine Stamm zur Milch in Mengen zugegeben wird, die im Bereich von 0,1 bis 1 % der Flüssigkultur in Bezug auf die Milch (Volumen/Volumen) liegen.

5. Verfahren gemäß Anspruch 4, **dadurch gekennzeichnet, dass** der mindestens eine Stamm zur Milch in Mengen zugegeben wird, die im Bereich von 0,3 bis 0,5 % der Flüssigkultur in Bezug auf die Milch (Volumen/Volumen) liegen.

6. Verfahren gemäß Anspruch 1, **dadurch gekennzeichnet, dass** der mindestens eine Stamm zur Milch in Mengen zugegeben wird, die im Bereich von zwischen 10¹¹ bis 10¹² CFU/100 Liter Milch liegen.

7. Verfahren gemäß einem der vorausgehenden Ansprüche,
**dadurch gekennzeichnet, dass** der mindestens eine Stamm zur Milch vor der Pasteurisierung zugegeben wird.

8. Stamm von Milchsäurebakterien, ausgewählt innerhalb der Gruppe bestehend aus L. plantarum LMG-P-21385, L. lactis Subsp. lactis LMG-P-21387, L. lactis Subsp. lactis LMG-P-21388 und L. plantarum LMG-P-21389.

9. Mischung von Milchsäurebakterien, die geeignet ist, die Koagulation von Milch zu verbessern/zu fördern, umfassend zwei oder mehr Stämme gemäß Anspruch 8.

10. Verwendung mindestens eines Stammes gemäß Anspruch 8, um die Koagulation von Milch zu verbessern/zu fördern.

11. Verwendung mindestens eines Stammes gemäß Anspruch 8, um Milchderivate herzustellen.

12. Verwendung gemäß Anspruch 11, wobei die Derivate Käse und/oder Joghurt sind.

13. Milch, die mindestens einen Stamm gemäß Anspruch 8 oder eine Mischung gemäß Anspruch 9 enthält.

14. Milch, die aus dem Verfahren gemäß einem der Ansprüche 1 bis 7 erhalten wird.

15. Milchprodukt, das sich aus der Milch gemäß den Ansprüchen 13 oder 14 ableitet.

## Revendications

1. Processus de traitement du lait destiné à fournir une plus grande capacité de coagulation du lait lors de sa transformation en produits laitiers comprenant le fait d'ajouter au lait, avant le traitement de coagulation, au moins une souche de bactéries lactiques choisie parmi les souches L. plantarum LMG-P-21385, L. lactis subsp. lactis LMG-P-21387, L. lactis subsp. lactis LMG-P-21388 et L. plantarum LMG-P-21389.

2. Processus tel que revendiqué dans la revendication 1, **caractérisé en ce que** ladite au moins une souche est ajoutée au lait sous forme de culture liquide.

3. Processus tel que revendiqué dans la revendication 1, **caractérisé en ce que** ladite au moins une souche est ajoutée au lait sous forme anhydre.

4. Processus tel que revendiqué dans la revendication 1, **caractérisé en ce que** ladite au moins une souche est ajoutée au lait en quantités de culture liquide allant de 0,1 à 1% par rapport au lait (en volume/volume).

5. Processus tel que revendiqué dans la revendication 4, **caractérisé en ce que** ladite au moins une souche est ajoutée au lait en quantités de culture liquide allant de 0,3 à 0,5% par rapport au lait (en volume/volume).

6. Processus tel que revendiqué dans la revendication 1, **caractérisé en ce que** ladite au moins une souche est ajoutée au lait en quantités allant de 10¹¹ à 10¹² CFU/100 litres de lait.

7. Processus tel que revendiqué dans l'une des revendications précédentes, **caractérisé en ce que** ladite au moins une souche est ajoutée au lait avant la pasteurisation.

8. Souche de bactéries lactiques choisies du groupe constitué des souches L. plantarum LMG-P-21385, L. lactis subsp. lactis LMG-P-21387, L. lactis subsp. lactis LMG-P-21388 et L. plantarum LMG-P-21389.

9. Mélange de bactéries lactiques appropriées pour améliorer/favoriser la coagulation du lait comprenant deux ou plusieurs souches telles que revendiquées dans la revendication 8.

10. Utilisation d'au moins une souche telle que revendiquée dans la revendication 8 pour améliorer/favoriser la coagulation du lait.

11. Utilisation d'au moins une souche telle que revendiquée dans la revendication 8 pour préparer des dérivés du lait.

12. Utilisation telle que revendiquée dans la revendication 11 dans laquelle lesdits dérivés sont des fromages et/ou du yaourt.

13. Lait contenant au moins une souche de la revendication 8 ou un mélange tel que revendiqué dans la revendication 9.

14. Lait obtenu par le processus tel que revendiqué dans l'une des revendications 1 à 7,

15. Produits laitiers dérivés du lait selon les revendications 13 ou 14.
